# EUROPÄISCHE PATENTSCHRIFT

(11) **EP 3 117 370 B1**
(45) Veröffentlichungstag und Bekanntmachung des Hinweises auf die Patenterteilung: **11.08.2021**
(21) Anmeldenummer: 15707677.9
(22) Anmeldetag: 05.03.2015
(51) Int. Cl.: G06K 19/077

(54) **VERFAHREN ZUM AUSTAUSCHEN VON DATEN ZWISCHEN EINEM WERT- ODER SICHERHEITSDOKUMENT UND EINER DATENAUSTAUSCH-VORRICHTUNG UND WERT- ODER SICHERHEITSDOKUMENT**
METHOD FOR EXCHANGING DATA BETWEEN A VALUE OR SECURITY DOCUMENT AND A DATA EXCHANGING DEVICE, AND VALUE OR SECURITY DOCUMENT
PROCÉDÉ DE TRANSMISSION DE DONNÉES ENTRE UN DOCUMENT DE VALEUR OU DE SÉCURITÉ ET UN DISPOSITIF DE TRANSMISSION DE DONNÉES, ET DOCUMENT DE VALEUR OU DE SÉCURITÉ

(30) Priorität: 12.03.2014 DE 102014204553
(43) Veröffentlichungstag der Anmeldung: 18.01.2017
(73) Patentinhaber: Bundesdruckerei GmbH, 10969 Berlin (DE)
(72) Erfinder: FISCHER, Jörg, 13053 Berlin (DE); TIETKE, Markus, 12439 Berlin (DE); TRÖLENBERG, Stefan, 15749 Mittenwalde OT Ragow (DE)
(74) Vertreter: Patentanwälte Bressel und Partner mbB
(86) Internationale Anmeldenummer: PCT/EP2015/054613
(87) Internationale Veröffentlichungsnummer: WO 2015/135829

(56) Entgegenhaltungen:
- DE-A1-102010 028 444
- DE-A1-102012 203 251
- DE-B3-102006 008 345
- US-A1- 2012 241 524
- US-B2- 7 586 413

## Beschreibung

Die vorliegende Erfindung betrifft ein Verfahren zum Austauschen von Daten zwischen einem Wert- oder Sicherheitsdokument, insbesondere einem Dokument mit einem Transponderschaltkreis, und einer ein elektromagnetisches Hochfrequenzfeld erzeugenden Datenaustausch-Vorrichtung sowie das Wert- oder Sicherheitsdokument, die insbesondere den Transponderschaltkreis aufweist.

Wert- oder Sicherheitsdokumente sind bekannt. Es handelt sich häufig um Identifikationsdokumente, wie ein Passdokument oder einen Personalausweis, oder um Dokumente, die einen Wert verbriefen, wie Bank- und Kreditkarten, Banknoten, Wertpapiere und dergleichen. Derartige Dokumente weisen zu deren Echtheitsverifikation Sicherheitsmerkmale auf. Außerdem können Informationen in Sicherheitsmerkmalen kodiert sein, die für die Allgemeinheit entweder leicht oder nicht leicht oder überhaupt nicht ohne spezielle Kenntnisse und/oder Hilfsmittel erkennbar sind. In den letzteren Fällen sind nur fachkundige Personen in der Lage, derartige Informationen wahrzunehmen und zu lesen.

Um Information zu speichern, können insbesondere Bank-, Kredit- und andere Barzahlungskarten elektronische Speichermedien enthalten, beispielsweise einen integrierten Halbleiterchip. Auf diesem Chip können Identifikationsdaten oder andere Daten abgelegt sein. Beispielsweise können in Identifikationsdokumenten integrierte Halbleiterchips enthalten sein, in denen bestimmte Daten des Ausweisinhabers gespeichert sind. Zum Datenaustausch zwischen einem externen Schreib- und Lesegerät (Reader) und dem Chip in der Karte kann ein elektrischer Kontakt zwischen dem externen Gerät und dem Chip über Kontaktflächen hergestellt sein, die in das Dokument integriert und die mit dem Chip verbunden sind.

Ein Aufbau für ein einen Halbleiterchip enthaltendes Chipmodul, das in eine Karte integriert ist und das äußere Kontaktflächen für den Datenaustausch mit einem Lesegerät aufweist, ist in WO 98/06063 A1 angegeben. Die in dieser Druckschrift beschriebene Karte weist einen integrierten Schaltkreis auf, der in ein Modul eingebettet ist, das einen kombinierten Anschluss mit externen Kontaktflächen sowie für einen kontaktlosen Datenaustausch eine Transponderantenne aufweist.

Dokumente, die einen Transponderschaltkreis aufweisen, werden seit langem benutzt, um Daten in dem Dokument elektronisch speichern zu können und den zum Speichern und Wieder-Auslesen erforderlichen Datenaustausch mit einer externen Datenaustausch-Vorrichtung (Reader) kontaktlos vornehmen zu können. Dies ermöglicht eine schnelle Handhabbarkeit. Beispielsweise ist ein derartiges System schon seit vielen Jahren in Zugangskarten im Wintersport für die Berechtigung, einen Skilift benutzen zu dürfen, in Betrieb.

Aus DE 10 2010 028 444 A1 geht ein Dokument mit einem Chip und einer Antenne zur induktiven Einkopplung von Energie hervor. Die Antenne dieses Dokuments weist eine äußere Windung, zumindest eine mittlere Windung und eine innere Windung auf, wobei der Chip mit der äußeren und der inneren Windung in elektrischem Kontakt steht. Die mittlere Windung überbrückt den Chip in einem Überbrückungsbereich der Antenne. Die Antenne ist spiralförmig ausgebildet.. Außerdem weist das Dokument eine Anzeige auf, die von einem Treiber des Chips angesteuert wird.

Ferner geht aus DE 10 2012 203 251 A1 ein Wert- und/oder Sicherheitsdokument in Form einer Karte mit einer kontaktlosen Datenübertragungseinrichtung hervor, die auf einem elektrisch isolierenden Träger ein Schaltkreiselement in Form eines Antennen-Leiterzuges und einen mit diesem Schaltkreiselement elektrisch verbundenen ungehäusten Chip aufweist. Das Dokument weist ferner ein Anzeigeelement auf, das mit dem Chip verbunden ist.

Auch die US 7, 586,413 B2 und US 2012/0241524 A1 zeigen mit einem RFID-Chip versehene Gegenstände, die zusätzlich ein Anzeigeelement zum Liefern einer Rückkopplung aufweisen.

Aus DE 10 2006 008 345 B3 ist ein Sicherheits- oder Wertdokument bekannt, das eine elektronische Transponderschaltung mit einer damit verbundenen Transponderantenne aufweist. Das Dokument ist ferner mit einer Anzeige ausgestattet, welche ein optisches, akustisches oder mechanisches Signal bei oder nach einer Aktivierung der Transponderantenne erzeugt. Falls ein optisches Signal erzeugt wird, ändern sich die optischen Eigenschaften der Anzeige durch Anlegen einer elektrischen Spannung bzw. einer Potenzialdifferenz an diese.

DE 10 2007 016 777 A1 gibt ein Sicherheits- oder Wertdokument mit einem Kartenkörper und einem in den Kartenkörper eingebetteten Displaymodul an. Hierzu können zunächst ein Teil des Kartenkörpers ausgestanzt und dann das Modul in diese Kavität eingesetzt werden. Auf der Unterseite des Moduls kann sich eine Struktur in Form von Erhebungen befinden, welche in eine entsprechende komplementäre Struktur im Kartenkörper greift, sodass die Haftung zwischen dem Kartenkörper und dem Modul verbessert wird. Diese Struktur kann außerdem als Sicherheitsmerkmal ausgebildet sein. Beispielsweise können sich an der Unterseite des Moduls stegartige Erhebungen befinden, die durch die Rückseite der Karte zunächst herausragen und anschließend thermisch oder durch Ultraschall irreversibel mit dem Kartenkörper verbunden werden und als leicht erkennbares Merkmal ein Muster auf der Dokumentenrückseite bilden.

Es hat sich gezeigt, dass der kontaktlose Datenaustausch mit dazu vorgesehenen Dokumenten nicht immer ausreichend bedienungsfreundlich ist. Insbesondere kann es vorkommen, dass der Datenaustausch mit einem Lesegerät fehlschlägt, ohne dass die das Dokument bedienende Person die Ursachen für diese Fehlfunktion schnell und sicher erkennen kann. Der vorliegenden Erfindung liegt darüber hinaus die wesentliche weitere Aufgabe zugrunde, ein kostengünstig, einfach und schnell realisierbares, insbesondere individualisierendes, Sicherheitsmerkmal zu schaffen.

Soweit in der Beschreibung und in den Ansprüchen der vorliegenden Anmeldung der Begriff ,Wert- oder Sicherheitsdokument verwendet wird, ist darunter beispielsweise ein Reisepass, Personalausweis, Führerschein oder eine andere ID-Karte oder ein Zugangskontrollausweis, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton, Haftetikett (beispielsweise zur Produktsicherung) oder ein anderes ID-Dokument zu verstehen. Das Dokument ist vorzugsweise eine Smartcard. Das Sicherheits- oder Wertdokument kann im ID 1-, ID 2-, ID 3- oder in irgendeinem anderen Format vorliegen, beispielsweise in Karten- oder in Heftform, wie bei einem passähnlichen Gegenstand. Ein Sicherheits- oder Wertdokument ist im Allgemeinen ein Laminat aus mehreren Dokumentenlagen, die passergenau unter Wärmeeinwirkung und unter erhöhtem Druck flächig miteinander verbunden sind. Alternativ können diese Dokumente auch durch Spritzgießen oder Extrudieren hergestellt werden. Die Dokumente sollen den normierten Anforderungen genügen, beispielsweise gemäß ISO/IEC 10373, 7810, 14443. Die Dokumentenlagen bestehen vorzugsweise aus einem Dokumententrägermaterial, das sich für eine Lamination eignet.

Das Wert- oder Sicherheitsdokument kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, und/oder Papier und/oder Pappe und/oder Glas und/oder Metall und/oder Keramik. Außerdem kann das Produkt auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus 3 bis 12, vorzugsweise 4 bis 10 Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise ein kinegraphisches Element) oder eine Kratzschutzfolie sein. Derart gebildete Overlaylagen schützen ein darunter angeordnetes Sicherheitsmerkmal und/oder verleihen dem Dokument die erforderliche Abriebfestigkeit.

Soweit in der Beschreibung und in den Ansprüchen einzelne Begriffe im Singular verwendet werden, beispielsweise 'Anzeigemodul', 'Anzeigeschaltkreis', 'Anzeigeantenne', 'Anzeigeelement', 'Transpondermodul' 'Transponderschaltkreis', 'Transponderantenne', 'RFID-Halbleiterchip', so sind diese Begriffe jeweils auch im Plural zu verstehen, also beispielsweise 'Anzeigemodule', 'AnzeigeschaItkreise' 'Anzeigeantennen', 'Anzeigeelemente', 'Transpondermodule', 'Transponderschaltkreise', 'Transponderantennen', 'RFID-Halbleiterchips', sofern nicht ausdrücklich etwas anderes angegeben ist. In entsprechender Weise gilt auch das Umgekehrte, nämlich dass die genannten Begriffe, wenn sie im Plural verwendet werden, auch in ihrer Singularbedeutung zu verstehen sein sollen, sofern nicht ausdrücklich etwas anderes angegeben ist.

Die vorstehend genannten Probleme werden gemäß einem ersten Aspekt der vorliegenden Erfindung durch das erfindungsgemäße Verfahren zum Austauschen von Daten gelöst.

Die vorstehend genannten Probleme werden gemäß einem zweiten Aspekt durch ein nicht erfindungsgemäßes Wert- oder Sicherheitsdokument gelöst.

Das erfindungsgemäße Verfahren dient zum Austauschen von Daten zwischen dem Wert- oder Sicherheitsdokument und einer ein elektromagnetisches Hochfrequenzfeld erzeugenden Datenaustausch-Vorrichtung (Reader). Das Wert- oder Sicherheitsdokument weist den mindestens einen Transponderschaltkreis mit jeweils mindestens einem RFID-Halbleiterchip und den mindestens einen Anzeigeschaltkreis mit jeweils mindestens einem Anzeigeelement auf. Das Verfahren umfasst folgende Verfahrensschritte:
(a) Erzeugen des elektromagnetischen Hochfrequenzfeldes mittels der Datenaustausch-Vorrichtung;
(b) Durchführen eines Datenübertragungsvorganges, umfassend das Auslesen und Übertragen von in dem mindestens einen RFID-Halbleiterchip gespeicherten Daten zu der Datenaustausch-Vorrichtung; und
(c) Erzeugen eines Signals mittels des elektromagnetischen Hochfrequenzfeldes in dem mindestens einen Anzeigeschaltkreis, sodass das mindestens eine Anzeigeelement in dem mindestens einen Anzeigeschaltkreis aktiviert wird.

Eine Aktivierung des mindestens einen Anzeigeelements bedeutet, dass das mindestens eine Anzeigeelement je nach dessen Ausbildung entweder ein optisch oder akustisch oder haptisch oder noch anders erfassbares Signal aussendet. Das optisch erfassbare Signal kann in irgendeinem Spektralbereich des elektromagnetischen Spektrums, beispielsweise im sichtbaren oder UV- oder IR-Spektralbereich, liegen. Alternativ kann das Signal auch in noch einem anderen Spektralbereich des elektromagnetischen Spektrums liegen, beispielsweise im Mikrowellen- oder Radiofrequenzbereich. Das Signal kann von einem Nutzer wahrnehmbar oder ausschließlich maschinell erfassbar sein. Es kann von einem Nutzer wahrgenommen oder von einer hierzu ausgebildeten Vorrichtung (Verifikationsvorrichtung, Empfängervorrichtung) erfasst werden.

Die vorstehenden Verfahrensschritte können in der angegebenen Reihenfolge nacheinander oder zumindest teilweise auch gleichzeitig durchgeführt werden, wobei aber zusätzliche Verfahrensschritte vor und/oder nach und/oder zwischen diesen Verfahrensschritten vorgenommen werden können. Bevorzugt können alle Verfahrensschritte (a) bis (c) nahezu gleichzeitig durchgeführt werden.

Das für die Ausführung des erfindungsgemäßen Verfahrens geeignete Wert- oder Sicherheitsdokument weist mindestens einen Transponderschaltkreis und mindestens einen Anzeigeschaltkreis auf. Der mindestens eine Transponderschaltkreis weist jeweils mindestens eine Transponderantenne und mindestens einen mit der mindestens einen Transponderantenne elektrisch verbundenen RFID-Halbleiterchip (Transponderchip) auf. Der mindestens eine Anzeigeschaltkreis weist jeweils mindestens eine Anzeigeantenne und mindestens ein mit der mindestens einen Anzeigeantenne elektrisch verbundenes Anzeigeelement auf. Der mindestens eine Anzeigeschaltkreis ist dazu ausgebildet, Energie über die mindestens eine Anzeigeantenne aufzunehmen.

Mit dem mindestens einen Anzeigeschaltkreis, der zusätzlich zu dem mindestens einen Transponderschaltkreis in dem Wert- oder Sicherheitsdokument enthalten ist, kann beispielsweise für eine Person wahrnehmbar angezeigt werden, dass ein Datenaustausch zwischen dem Wert- oder Sicherheitsdokument und der Datenaustausch-Vorrichtung stattfindet. Da der Anzeigeschaltkreis dazu ausgebildet ist, das elektromagnetische Hochfrequenzfeld der Datenaustausch-Vorrichtung zu detektieren, indem durch das elektromagnetische Hochfrequenzfeld ein Signalstrom in der Anzeigeantenne induziert wird und dadurch von dem Anzeigeelement ein Signal ausgegeben wird (das Anzeigeelement aktiviert wird), ist der Auslesevorgang für die Person wahrnehmbar. Grundsätzlich wäre es zwar möglich, eine Signalableitung aus dem Transponderschaltkreis dafür vorzusehen, dass ein Signal in einer entsprechenden Anzeigevorrichtung für eine Person wahrnehmbar gemacht wird. Aus Sicherheitsgründen weisen die für Transponderschaltungen vorgesehenen und dazu ausgebildeten RFID-Halbleiterchips (kryptographischen Chips) nur die für einen Anschluss an die Transponderantenne erforderlichen Ausgänge auf, nicht aber noch weitere Ausgänge. Darüber hinaus ist auch eine Auskopplung eines Signals aus dem Transponderschaltkreis nicht realisierbar, da damit eine erhebliche und daher nicht hinnehmbare Verringerung der Datenaustauschgeschwindigkeit in Kauf genommen werden müsste.

Da mit dem mindestens einen Anzeigeschaltkreis das elektromagnetische Hochfrequenzfeld separat erfassbar ist, kann ferner nicht nur der Datenaustausch zwischen dem Wert- oder Sicherheitsdokument und der Datenaustausch-Vorrichtung für eine Person wahrnehmbar gemacht werden. Zusätzlich bestehen auch weitere Möglichkeiten der Informationsübermittlung über den Anzeigeschaltkreis, nämlich die Möglichkeit des Auslesens von Daten über den damit für eine Person erfassbaren Wahrnehmungsweg, beispielsweise auf optischem Weg, oder auch durch einen maschinellen Erfassungsvorgang. Alternativ ist auch eine haptische oder akustische Wahrnehmung möglich, beispielsweise die akustische Ausgabe eines Warnsignals, das aufgrund von in dem RFID-Halbleiterchip gespeicherten Informationen ausgegeben wird, oder die Ausgabe eines Vibrationssignals als Bestätigung eines laufenden oder eines gerade abgeschlossenen Datenübertragungsvorganges. Es ist darüber hinaus möglich, dass diese Informationsübermittlung nicht nur von einer Person wahrnehmbar ist, sondern auch von einer Empfängervorrichtung erfasst werden kann, die über denselben Informationsaustauschkanal Daten erfassen kann, über den die Daten von dem mindestens einen Anzeigeelement ausgegeben werden.

Das erfindungsgemäße Verfahren weist ferner die folgenden weiteren Verfahrensschritte auf:
(f) Umwandeln der in dem Datenübertragungsvorgang übertragenen Daten in eine Kodier-Signalfolge;
(g) Modulieren des elektromagnetischen Hochfrequenzfeldes mit der Kodier-Signalfolge, sodass das mindestens eine Anzeigeelement mit der Kodier-Signalfolge aktiviert wird.

Die vorstehenden Verfahrensschritte können in der angegebenen Reihenfolge nacheinander durchgeführt werden, wobei aber zusätzliche Verfahrensschritte vor und/oder nach und/oder zwischen diesen Verfahrensschritten vorgenommen werden können.

Mittels des erfindungsgemäßen Verfahrens ist es möglich, die in einem ersten Schritt aus dem RFID-Halbleiterchip ausgelesene Information in einem zweiten Schritt an den Anzeigeschaltkreis zu übermitteln und dann aufgrund einer entsprechenden Aktivierung des Anzeigeelements an die Empfängervorrichtung weiter zu übermitteln. Damit wird das Problem herkömmlicher Anordnungen gelöst, dass in dem RFID-Halbleiterchip gespeicherte Information nicht ohne weiteres beispielsweise an ein mobiles Gerät weiterleitbar ist. Der beim Auslesen des RFID-Halbleiterchips erzeugte Datenstrom kann sich von der Kodiersignalfolge unterscheiden, sodass er beispielsweise mit einer veränderten Frequenz an den Anzeigeschaltkreis und von dort an die Empfängervorrichtung übertragen wird. Der Datenstrom kann mit der Kodiersignalfolge aber auch identisch sein.

Die Erfindung schließt sinnvollerweise ein, dass die in dem RFID-Halbleiterchip gespeicherte Information dieselbe ist, mit der auch das elektromagnetische Hochfrequenzfeld moduliert wird, sodass diese Information in Form der Modulation des Feldes die Aktivierung des Anzeigeelements bestimmt, sodass die Information über das Anzeigeelement an die Empfängervorrichtung übermittelt werden kann. Selbstverständlich ist es natürlich auch möglich, dass nicht die Information mit der ursprünglichen Kodierung zu dem Anzeigeschaltkreis und von dort zur Empfängervorrichtung übertragen wird. Denkbar ist insbesondere, dass die Information, die von dem RFID-Halbleiterchip zunächst ausgelesen und zu der Datenaustausch-Vorrichtung übertragen worden ist, vor der Weiterleitung zum Anzeigeschaltkreis und zur Empfängervorrichtung verschlüsselt wird. Die Information, die die Datenaustausch-Vorrichtung empfangen hat, kann vor der Weiterleitung auch mit weiteren Daten, die nicht von dem RFID-Halbleiterchip stammen, kombiniert werden, sodass die an den Anzeigeschaltkreis übermittelte Information dann nur teilweise mit der ursprünglich zur Datenaustausch-Vorrichtung gelangten Information identisch ist. Diese Verbindung der Informationen kann auch eine Verarbeitung der ursprünglichen Daten mit weiteren Daten bedeuten, sodass die schließlich an den Anzeigeschaltkreis übermittelte Information mit der ursprünglich ausgelesenen Information auch nicht mehr teilweise identisch ist. Zum Zwecke der Realisierung der vorstehend erläuterten Ausführungsformen ist die Datenaustausch-Vorrichtung vorzugsweise mit einer Datenverarbeitungseinrichtung verbunden. Diese steuert die Datenaustausch-Vorrichtung und speichert beispielsweise Daten, die von der Datenaustausch-Vorrichtung an die Datenverarbeitungseinrichtung geliefert werden.

In einer weiteren bevorzugten Ausführungsform der vorliegenden Erfindung wird eine Aktivierung des mindestens einen Anzeigeelements mittels einer Empfängervorrichtung detektiert. Die Empfängervorrichtung, die eine maschinelle Erfassung der Aktivierung ermöglicht, kann an die Stelle einer menschlichen Person treten. Damit sind auch solche von dem Anzeigeelement ausgehende Signale erfassbar, die von einer Person nicht wahrnehmbar sind, beispielsweise eine Emission von elektromagnetischer Strahlung außerhalb des sichtbaren Spektralbereiches mittels des Anzeigeelements oder akustische Signale mit einer Frequenz außerhalb des Wahrnehmungsbereiches eines Menschen.

In noch einer weiteren Ausführungsform der vorliegenden Erfindung weist das erfindungsgemäße Verfahren den folgenden weiteren Verfahrensschritt auf:
(h) Detektieren der Aktivierung des mindestens einen Anzeigeelements mit der Kodier-Signalfolge mittels einer Empfängervorrichtung.

In einer bevorzugten Ausführungsform der vorliegenden Erfindung sind der mindestens eine Anzeigeschaltkreis und der mindestens eine Transponderschaltkreis elektrisch voneinander getrennt. Somit beeinflussen sich diese beiden Schaltkreise praktisch nicht. Insbesondere kann der Transponderschaltkreis ohne Beeinträchtigung durch den Anzeigeschaltkreis einen ungehinderten Datenaustausch mit einer Datenaustausch-Vorrichtung ausführen.

In einer weiteren bevorzugten Ausführungsform der vorliegenden Erfindung befindet sich der mindestens eine Anzeigeschaltkreis in derselben Ebene wie der mindestens eine Transponderschaltkreis. Grundsätzlich können sich der mindestens eine Transponderschaltkreis und der mindestens eine Anzeigeschaltkreis aber alternativ auch in unterschiedlichen Ebenen befinden. Um eine besonders kostengünstige Herstellung des Dokuments zu erreichen, können sich der Anzeigeschaltkreis und der Transponderschaltkreis in derselben Ebene im Dokument befinden und hierzu auf derselben Oberfläche einer Polymerlage in dem Wert- oder Sicherheitsdokument angeordnet sein, falls das Dokument aus mehreren derartigen Lagen gebildet ist. In diesem Falle können die beiden Schaltkreise nebeneinander auf dieser Oberfläche angeordnet oder alternativ ineinander verschachtelt sein, d.h. beispielsweise der Anzeigeschaltkreis sich innerhalb einer von dem Transponderschaltkreis umschlossenen Fläche befinden, etwa innerhalb einer von der Transponderantenne umschlossenen Fläche, oder beispielsweise der Transponderschaltkreis sich innerhalb einer von dem Anzeigeschaltkreis umschlossenen Fläche befinden, etwa innerhalb einer von der Anzeigeantenne umschlossenen Fläche. Falls sich die beiden Schaltkreise in unterschiedlichen Ebenen befinden, können beispielsweise der eine Schaltkreis, zum Beispiel der Transponderschaltkreis, auf einer der beiden Oberflächen einer Polymerlage und der andere Schaltkreis, in diesem Falle der Anzeigeschaltkreis, auf der anderen der beiden Oberflächen der Polymerlage angeordnet sein. Dies kann auch zutreffen, wenn das Dokument als mehreren derartigen Lagen gebildet ist. Alternativ können die Schaltkreise auch auf den Oberflächen unterschiedlicher Polymerlagen angeordnet sein. Nochmals alternativ dazu kann der Anzeigeschaltkreis auf einem separaten Substrat gebildet sein und damit zusammen mit dem Substrat ein Anzeigemodul bilden, und das Anzeigemodul kann in eine Kavität in dem Transponderträger eingesetzt werden, sodass sich die Anzeigeantenne des Anzeigemoduls innerhalb einer von der Transponderantenne umschlossenen Fläche oder vorzugsweise neben der Transponderantenne befindet, sodass beide Schaltkreise unterschiedliche Flächen im Dokument einnehmen. Alternativ dazu kann auch der Transponderschaltkreis auf einem separaten Substrat gebildet sein und damit zusammen mit dem Substrat ein Transpondermodul bilden, und das Transpondermodul kann in eine Kavität in dem Anzeigeträger eingesetzt werden, sodass sich die Transponderantenne des Transpondermoduls innerhalb der Anzeigeantenne oder vorzugsweise neben der Anzeigeantenne befindet, sodass beide Schaltkreise unterschiedliche Flächen im Dokument einnehmen. Um eine besonders kostengünstige Herstellung des Dokuments zu erreichen, können beide Schaltkreise in derselben Ebene oder zumindest auf demselben Substrat, beispielsweise einer Polymerlage, aus der das Dokument gebildet ist, angeordnet sein.

In einer weiteren bevorzugten Ausführungsform der vorliegenden Erfindung ist das mindestens eine Anzeigeelement ausgewählt aus einer Gruppe, umfassend eine LED (light emitting diode) und eine OLED (organic light emitting diode). Alternativ können grundsätzlich auch Flüssigkristallanzeigen verwendet werden, wenn diese mit einer für den Betrieb der Anzeige vorgesehenen elektronischen Schaltung versehen sind, damit das Anzeigeelement eine für die Bildung des Anzeigeschaltkreises erforderliche elektrische Kapazität aufweist.

Die mindestens eine Anzeigeantenne des Anzeigeschaltkreises ist vorzugsweise durch jeweils mindestens eine Schleife (Windung) gebildet, durch die das zu detektierende elektromagnetische Hochfrequenzfeld hindurchtritt, das in der Schleife einen elektrischen Strom induziert. An den beiden Enden der Schleife ist das Anzeigeelement mit jeweils einem seiner Anschlusskontakte über Anschlussflächen der Anzeigeantenne elektrisch verbunden. Vorzugsweise weist die Anzeigeantenne mehrere Windungen in Form von Leiterbahnen oder-drähten auf, wobei die einzelnen Windungen vorzugsweise parallel zueinander verlaufen, sodass die Antenne bevorzugt spiralförmig ausgebildet ist. Auch in diesem Falle weist die Anzeigeantenne zwei Enden in Form von Anschlussflächen auf, über die diese mit den Anschlusskontakten des Anzeigeelements elektrisch verbunden sind. Die Anschlussflächen der Anzeigeantenne befinden sich bevorzugt in geringstmöglichem Abstand voneinander, um das Anzeigeelement in einfacher Weise mit diesen verbinden zu können. Das Anzeigeelement kann im Bereich der Anschlussflächen eine Brücke über den Windungsstrang bilden, der durch die einzelnen Windungen der Anzeigeantenne gebildet wird. Alternativ kann auch eine äußere oder innere Windung diesen Strang kreuzen, ohne mit den anderen Windungen in Kontakt zu kommen, sodass beide Anschlussflächen auf derselben Seite des Stranges, d.h. innerhalb oder außerhalb der von den Windungen umschlossenen Fläche, liegen. Dann kann das Anzeigeelement auf dieser Seite der Anzeigeantenne platziert und mit deren Anschlussflächen elektrisch verbunden sein.

Gemäß einer weiteren bevorzugten Ausführungsform der vorliegenden Erfindung ist die mindestens eine Anzeigeantenne aus einer Leitpaste oder Leitfarbe gebildet. Beispielsweise kann die Anzeigeantenne mit einem Druckverfahren auf einem Substrat, beispielsweise einer Polymerlage, nämlich dem Anzeigeträger, gebildet werden. Vorzugsweise ist die Anzeigeantenne als Druckschicht mit elektrisch leitenden Pigmentpartikeln ausgebildet. Entsprechendes gilt für elektrische Zuleitungen zu dem Anzeigeelement, wobei diese alternativ durch feine Drähte gebildet werden können, wenn das Anzeigeelement mittels Drahtbonden mit den Anschlussflächen elektrisch kontaktiert wird. Die Anzeigeantenne bzw. die elektrischen Zuleitungen können mittels üblicher Drucktechniken auf den Anzeigeträger aufgebracht werden. Die Dicke der aufgedruckten Paste oder des Lacks kann insbesondere 1 µm bis 100 µm und besonders bevorzugt etwa 10 µm betragen. Die Leitpaste oder der Leitlack kann entweder einfach getrocknet werden oder mittels Wärme und/oder Bestrahlung mit elektromagnetischer Strahlung, beispielsweise UV-Strahlung, aushärtbar sein. Die Leitpaste oder Leitfarbe enthält mindestens ein Polymer als Binder sowie mindestens ein Metall und/oder ein leitfähiges Metalloxid und/oder anderes leitfähiges Material in dem Polymer. Als leitfähiges Material kommen Kupfer, Silber, Gold, Eisen, Zink, Zinn oder Kohlenstoff, insbesondere Graphit, Singlewall- und/oder Multiwall-Nanotubes, Fullerene oder Graphene in Betracht. Als Metalloxide kommen ITO (Indium-ZinnOxid), IZO, FTO (Fluor-dotiertes Zinndioxid), ATO (Antimonoxid) in Betracht. Die Metalle/Metalloxide können in Form von Flakes, Nadeln, Pulver (insbesondere nanoskalig), Plättchen oder dergleichen vorliegen. Insbesondere liegen diese als aggregierte Partikel vor. Als andere leitfähige Materialien kommen leitfähige organische Materialien/Polymere, z.B. Polyanilin, PEDOT:PSS, in Betracht. Beispiele für geeignete Materialien zum Herstellen der Anzeigeantenne sind Produkte der Firma NanoChemonics, NM, USA. Weitere Beispiele geeigneter Tinten bzw. Beschichtungsmittel sind die Produkte IJAg-150-Fx oder AG-IJ-G-100-51 (Silberbasis mit Partikeldurchmesser zwischen 30 und 50 nm), welche mittels Tintenstrahldruck aufbringbar sind. Diese Beschichtungsmittel zeichnen sich zudem dadurch aus, dass eine Leitschicht erst durch einen Aktivierungsschritt, z.B. Laserbestrahlung mit 500 bis 580 nm, im Wege der Sinterung der Partikel entsteht. Die an sich nicht leitfähige Schicht wird mit der Bestrahlung hoch leitfähig. Schließlich sind Siebdruckfarben mit leitfähigen Partikeln der Firmen Dupont (5028 oder 5029) und Spraylat einsetzbar, welche durch Wärmeeinwirkung ihre Leitfähigkeit erhöhen, insbesondere vervielfachen.

Alternativ kann die Anzeigeantenne auch in einer anderen Technik hergestellt sein, beispielweise in einer Ätztechnik aus Aluminium oder Kupfer mittels eines Ätzresists oder in einem Pattern-Plating-Verfahren. Bei Pattern-Plating-Verfahren werden, ausgehend von einer Grundmetallisierung, beispielsweise aus Kupfer, mit einem Platingresist auf der Grundmetallisierung zunächst die Strukturen als Kanäle geformt. Dann wird zusätzliches Metall in den Kanälen galvanotechnisch abgeschieden. Nach dem Entfernen des Platingresists wird die Grundmetallisierung zwischen den Strukturen durch Ätzen entfernt.

Das Anzeigeelement wird dann auf dem Anzeigeträger bzw. einem Transponderträger, auf dem sich der Transponderschaltkreis befindet, oder auf noch einer anderen Polymerlage oder einem anderen Substrat befestigt und dabei oder danach mit der Anzeigeantenne elektrisch verbunden. Eine Möglichkeit der Befestigung und elektrischen Verbindung besteht darin, dass das Anzeigeelement in der sogenannten Flip-Chip-Technik, d.h. über Kopf mit dessen Anschlusskontakten nach unten, auf die Anschlussflächen der Anzeigeantenne aufgesetzt wird, wobei ein Leitkleber zwischen dem Träger bzw. der Anzeigeantenne und dem Anzeigeelement verwendet wird, um die Verbindungen herzustellen. Alternativ kann das Anzeigeelement auch neben den Anschlussflächen der Anzeigeantenne auf den Anzeigeträger aufgesetzt und mittels eines Klebers dort befestigt werden. Zur elektrischen Verbindung der Anschlussflächen der Anzeigeantenne mit den Anschlusskontakten des Anzeigeelements kann beispielsweise die Drahtbondtechnik eingesetzt werden, bei der dünne Drähte zuerst beispielsweise auf den Anschlusskontakten des Anzeigeelements befestigt, dann zu den Anschlussflächen der Anzeigeantenne geführt und schließlich dort befestigt werden. Dabei wird jeweils ein elektrischer Kontakt hergestellt. Die vorstehend angegebenen Verfahren und die hierbei verwendeten Materialien sind dem Fachmann bekannt.

Der mindestens eine Transponderschaltkreis, bevorzugt gebildet aus jeweils mindestens einer Transponderantenne und mindestens einem RFID-Halbleiterchip (Sicherheits-Chip), wird vorzugsweise von einem Transponderträger getragen, wobei die Gesamtheit dieser Elemente einen Transponder als in ein Dokumentenvorprodukt integrierbares Transpondermodul (Transponder-Inlet) bildet. Die Transponderantenne ist ebenso wie die Anzeigeantenne des Anzeigeschaltkreises durch vorzugsweise mehrere Antennenwindungen gebildet, die, besonders bevorzugt, spiralförmig ausgebildet sein können. An den Enden der Transponderantenne befinden sich wie im Falle des Anzeigeschaltkreises Anschlussflächen, die mit den Anschlusskontakten des RFID-Halbleiterchips elektrisch verbunden sind, wobei der Chip auf dem Transponderträger befestigt ist. Die Transponderantenne kann ebenso wie die Anzeigeantenne beispielsweise mittels eines Druckverfahrens mit einer Leitpaste oder einem Leitlack gebildet werden. Insofern wird auf die diesbezüglichen Erläuterungen zur Herstellung der Anzeigeantenne verwiesen. Der RFID-Halbleiterchip kann durch einen ungehäusten Halbleiterchip (bare die) gebildet sein. Alternativ kann das Bauelement aber auch ein gehäustes Bauelement sein, beispielsweise ein Surface Mount Device (SMD) oder ein Chip Scale Package (CSP), oder in einer der folgenden Gehäuseformen: DIP, TQFP, MLF, SOTP, SOT, PLCC, QFN, SSOT, BGA, MOB oder anderen üblichen Gehäuseformen vorliegen. Des Weiteren können auch Submodule als Chipträger, basierend auf flexiblen Leiterplatten (Interposa) aus Polyimid, FR4, PC, dünnem Glas, verwendet werden. Der RFID-Halbleiterchip weist mindestens zwei Anschlusskontakte auf, die an der Kontaktierungsseite des Chips angeordnet sind und die vorzugsweise mit den an einander gegenüber liegenden Seiten des Windungsstranges angeordneten Anschlussflächen der Transponderantenne kontaktiert sind. In diesem Falle überbrückt der RFID-Halbleiterchip den Strang aus den Windungen der Transponderantenne. Alternativ kann der Chip auch innerhalb oder außerhalb der durch die Transponderantenne umschlossenen Fläche angeordnet sein. Hierzu kreuzt eine äußere bzw. innere Windung den Strang, ohne mit diesem in elektrischen Kontakt zu kommen.

Das beschriebene Wert- oder Sicherheitsdokument ist, wie oben angegeben, durch einen Dokumentenkörper gebildet, der vorzugsweise aus einer oder mehreren Lagen aus thermoplastisch verarbeitbaren Kunststoffen gebildet ist, wobei die oben angegebenen Polymere die thermoplastisch verarbeitbaren Kunststoffe sind. Falls der Anzeigeschaltkreis in Form eines separaten Anzeigemoduls vorliegt, kann es zum Einbetten in ein Dokumentenvorprodukt zunächst in eine Kavität in einer zentralen Polymerlage oder in einem Stapel mehrerer zentraler Polymerlagen eingesetzt werden. Die Kavität in den zentralen Polymerlagen kann beispielsweise durch Ausstanzen gebildet werden. Alternativ kann der Anzeigeträger selbst durch eine Polymerlage gebildet sein, die dieselbe Größe wie das Dokument aufweist. Ferner kann der Transponderschaltkreis ebenfalls auf einer Polymerlage angeordnet sein. Die Transponder-Polymerlage kann insbesondere genauso groß sein wie das Dokument. Das Ensemble aus verschiedenen Polymerlagen, von denen zumindest eine den Anzeigeschaltkreis und zumindest eine weitere den Transponderschaltkreis tragen, falls der Anzeigeschaltkreis und/oder der Transponderschaltkreis nicht in Form eines Anzeige- bzw. Transpondermoduls in eine Kavität des Dokuments eingesetzt wird oder der Anzeigeschaltkreis und der Transponderschaltkreis nicht auf derselben Polymerlage angeordnet sind, wird dann kollationiert. Alternativ kann auch eine sowohl den Transponderschaltkreis als auch den Anzeigeschaltkreis tragende Polymerlage mit weiteren Polymerlagen zusammengetragen werden. Abschließend wird der Stapel durch Laminieren zu einem monolithischen Block verbunden. Hierzu kann ein Wert- oder Sicherheitsdokument in einer Heiz-Kühl-Presse bei einer Temperatur bis zu etwa 200 °C und bei einem Druck von etwa 300 bis 500 N/cm² im Heizpresszyklus und etwa 500 bis 700 N/cm² im Kaltpresszyklus hergestellt werden. Diese Werte gelten für Dokumente aus Polycarbonat. Für andere Materialien werden entsprechend angepasste Temperaturen gewählt. Auf die sich an der Oberseite (der Seite, auf der sich die Anzeigeantenne befindet) befindende äußere Polymerlage kann in einer alternativen Ausführungsform auch verzichtet werden. In diesem Falle wird das laminierte Dokumentenvorprodukt dann mit einem Schutzlack auf der Oberseite versehen.

In einer weiteren bevorzugten Ausführungsform ist das mindestens eine Anzeigeelement dazu ausgebildet, dass es ein optisches und/oder akustisches und/oder mechanisches und/oder noch anderes Signal abgibt. Somit handelt es sich um ein Leuchtelement und/oder um einen akustischen Signalgeber und/oder um einen Vibrationsgeber oder anderen mechanischen Geber und/oder um einen noch anders gestalteten Geber. Derartige Anzeigeelemente sind dem Fachmann bekannt. Akustische und Vibrationsgeber sind im Allgemeinen mit einem piezoelektrischen Aktuator ausgestattet, um die akustischen und/oder mechanischen Signale zu erzeugen.

Da der Anzeigeschaltkreis vorzugsweise eine passive Schaltung darstellt, ist es lediglich möglich, in dem elektromagnetischen Hochfrequenzfeld enthaltene Information (Daten) mit diesem Schaltkreis zu erfassen. Dagegen ist eine Verarbeitung der an den Anzeigeschaltkreis übermittelten Daten in diesem Schaltkreis nicht möglich. Durch das in dem Anzeigeschaltkreis enthaltene Anzeigeelement ist jedoch eine Weiterleitung von Information, die von dem Schaltkreis aufgenommen wird, zu einem Empfänger möglich, wobei diese Weiterleitung mittels des Anzeigeelements, beispielsweise durch optisch und/oder akustisch und/oder haptisch wahrnehmbare Informationsübertragung stattfindet.

Somit kann das Signal in einer weiteren bevorzugten Ausführungsform in dem mindestens einen Anzeigeschaltkreis gemäß Verfahrensschritt (c) erzeugt werden, solange Daten gemäß Verfahrensschritt (b) aus dem mindestens einen RFID-Halbleiterchip ausgelesen und zu der Datenaustausch-Vorrichtung übertragen werden. Dies ergibt sich daraus, dass die Datenaustausch-Vorrichtung das elektromagnetische Hochfrequenzfeld während des Datenübertragungsvorganges erzeugt und beendet, sobald der Übertragungsvorgang beendet ist, sodass das Anzeigeelement nur in diesem Zeitintervall aktiviert wird. Falls ein Nutzer diese Aktivierung wahrnehmen kann, kann er daher erkennen, dass ein Datenübertragungsvorgang stattfindet.

Die Datenaustausch-Vorrichtung kann ein Lesegerät gemäß DIN/ISO 14443, ein Teil eines Verifikationsgerätes, ein Teil einer Zutrittskontrollanlage, ein Teil eines Kassenterminals, ein NFC (near field communication)-fähiges Mobiltelephon, eine einfache Wechselfelderzeugungsquelle ohne Lesefunktion oder noch ein anderes Gerät sein. Die Datenaustausch-Vorrichtung kann beispielsweise an eine Datenverarbeitungseinrichtung (Computer, Client oder Server) angeschlossen sein, der diese Vorrichtung steuert und/oder die von der Vorrichtung empfangenen Daten speichert und/oder verarbeitet.

In einer weiteren bevorzugten Ausführungsform der vorliegenden Erfindung umfasst das Verfahren im Anschluss an Verfahrensschritt (c) folgende weitere Verfahrensschritte:
(d) Übertragen eines Stoppsignals an die Datenaustausch-Vorrichtung bei einer Beendigung des Datenübertragungsvorganges;
(e) Modulieren des elektromagnetischen Hochfrequenzfeldes mittels der Datenaustausch-Vorrichtung mit einer Anzeige-Signalfolge, sodass das Anzeigeelement mit der Anzeige-Signalfolge aktiviert wird.

Die Verfahrensschritte (d) und (e) können in der angegebenen Reihenfolge nacheinander durchgeführt werden, wobei aber zusätzliche Verfahrensschritte vor und/oder nach und/oder zwischen diesen Verfahrensschritten vorgenommen werden können.

Diese Verfahrensfolge der Schritte (f), (g) und (h) kann unabhängig von der vorstehend erläuterten Verfahrensfolge mit den Verfahrensschritten (d) und (e) stattfinden. Sie kann sich beispielsweise an Verfahrensschritt (c) des vorstehend angegebenen erfindungsgemäßen Verfahrens anschließen.

Das Stoppsignal wird von dem Transponderschaltkreis an die Datenaustausch-Vorrichtung übermittelt, sobald der Auslesevorgang beendet ist. Die Dauer der Übermittlung dieses Signals kann beliebig gewählt werden und beträgt beispielsweise von 0,1 Sekunden bis 1 Tag, vorzugsweise von 1 Sekunde bis 1 Stunde, noch weiter bevorzugt von 2 Sekunden bis 5 Minuten und am meisten bevorzugt von 3 Sekunden bis 1 Minute. Wenn die Datenaustausch-Vorrichtung das Stoppsignal erhält, moduliert sie das elektromagnetische Hochfrequenzfeld gemäß Verfahrensschritt (e). Hierzu kann eine entsprechende Steuerung mit einer hierfür vorgesehenen Programmroutine bereits in der Datenaustausch-Vorrichtung vorhanden sein. Oder die Datenaustausch-Vorrichtung ist mit einer Datenverarbeitungseinrichtung verbunden, die die Datenaustausch-Vorrichtung in der angegebenen Art und Weise ansteuert. Das mit einer hierfür vorgesehenen Signalfolge modulierte Hochfrequenzfeld aktiviert dann das Anzeigeelement mit dieser Signalfolge, sodass das Anzeigeelement, zum Beispiel eine LED, beispielsweise in gleichmäßigen Zeitintervallen schnell blinkt. Durch die aufgrund der Modulation des elektromagnetischen Hochfrequenzfeldes bewirkte Aktivierung des Anzeigeelements zeigt einer Person an, dass der Datenübertragungsvorgang beendet ist. Die Aktivierung im Takt dieser Signalfolge kann sich von der Aktivierung des Anzeigeelements während des Datenübertragungsvorganges deutlich unterscheiden, beispielsweise durch die Frequenz, mit der das Anzeigeelement aktiviert wird. Beispielsweise ist es möglich, dass das Anzeigeelement während des Datenübertragungsvorganges mit einer von dem Auge eines Menschen nicht mehr auflösbaren Frequenz aktiviert wird, während die Aktivierung aufgrund des Stoppsignals beispielsweise durch ein deutlich wahrnehmbares Blinken oder durch ein wahrnehmbare Unterbrechungen aufweisendes akustisches Signal gekennzeichnet ist.

Die Empfängervorrichtung kann insbesondere ein mobiles Gerät sein, beispielsweise ein Smartphone, ein Personal Digital Assistant oder ein Verifikationsgerät. Falls das mobile Gerät eine hierfür geeignete Anwendungssoftware aufweist, kann es dazu verwendet werden, das Dokument zu prüfen, indem beispielsweise die übermittelten Daten auf einem Display angezeigt werden oder einer Person mittels einer Echtheitsanzeige angezeigt wird, ob das geprüfte Dokument echt ist.

In einer weiteren bevorzugten Ausführungsform kann der Anzeigeschaltkreis in Form eines in ein Vorprodukt des Wert- oder Sicherheitsdokuments integrierbaren Anzeigemoduls vorliegen, wobei das Anzeigemodul einen Anzeigeträger und den mindestens einen Anzeigeschaltkreis aufweist, der auf dem Anzeigeträger angeordnet ist. Zur Schaffung eines zusätzlichen leicht wahrnehmbaren Sicherheitsmerkmals können die mindestens eine Anzeigeantenne und/oder der Umriss des Anzeigemoduls Gestaltungen aufweisen, die jeweils eine Information kodieren. Beispielsweise kann vorgesehen sein, dass sich die mindestens eine Anzeigeantenne und/oder das mindestens eine Anzeigeelement jeweils durch Vertiefungen und/oder Erhebungen an der Oberfläche des Wert- oder Sicherheitsdokuments abzeichnen. Diese dreidimensionalen Gestaltungen können eine bestimmte Information kodieren, insbesondere wenn die Anzeigeantenne und das Anzeigeelement gemeinsam in einer bestimmten Gestalt, beispielsweise in Form eines Logos, Symbols, Wappens oder dergleichen, gestaltet sind. Desgleichen kann vorgesehen sein, dass sich mindestens eine Fuge, die sich zwischen dem mindestens einen in dem Wert- oder Sicherheitsdokument integrierten Anzeigemodul und einem umgebenden Material des Wert- oder Sicherheitsdokuments bildet, durch Vertiefungen und/oder Erhebungen an der Oberfläche des Wert- oder Sicherheitsdokuments abzeichnet. Auch diese Gestaltung kann eine Information kodieren, beispielsweise wenn die Umrissgestaltung des Anzeigemoduls entsprechend der Form eines Barcodes oder dergleichen ausgebildet ist. Zusätzlich kann ein Sicherheitsmerkmal durch das Anzeigemodul gebildet werden, wenn das Anzeigemodul eine lokal variierende Transmission für elektromagnetische Strahlung aufweist, die ein eine Information kodierendes Muster ergibt. Beispielsweise kann vorgesehen sein, dass die Transmission ortsabhängig variiert, indem die Dicke des Anzeigemoduls ortsabhängig variiert und/oder sich mindestens eine Schicht auf dem Anzeigeträger befindet, deren Vorhandensein und/oder Dicke und/oder optische Dichte ortsabhängig variiert.

Damit werden zusätzliche Sicherheitsmerkmale des Wert- oder Sicherheitsdokuments geschaffen, die von einer Person leicht wahrnehmbar sind (Level 1-Sicherheitsmerkmal).

Zur exemplarischen Erläuterung der vorliegenden Erfindung dienen die nachfolgend beschriebenen Figuren, die aufgrund ihres beispielhaften Charakters jedoch nicht schutzbeschränkend sind. Es zeigen im Einzelnen:
- Fig. 1: eine Identitätskarte in einer schematischen isometrischen Ansicht;
- Fig. 2: eine Polymerlage mit einem Transponderschaltkreis und einem Anzeigeschaltkreis in einer schematischen Draufsicht;
- Fig. 3: die Identitätskarte von Fig. 1 in einer schematischen Querschnittsansicht entlang Schnitt I-I von Fig. 2;
- Fig. 4: ein Ersatzschaltbild eines Anzeigeschaltkreises;
- Fig. 5: eine Anordnung einer Identitäts-(Hybrid)karte mit Transponder- und Anzeigeschaltkreis in Kommunikation mit einer Datenaustausch-Vorrichtung und einer Empfängervorrichtung; (A) mit einer LED, OLED als Anzeigeelement in einer schematischen Ansicht; (B) mit einem Lautsprecher als Anzeigeelement in einer schematischen Ansicht;
- Fig. 6: eine Signalfolge der Aktivierung des Anzeigeelements;
- Fig. 7: eine Anordnung einer Identitäts-(Hybrid)karte mit Transponder- und Anzeigeschaltkreis in Kommunikation mit einer Datenaustausch-Vorrichtung und einer Datenverarbeitungseinrichtung sowie einer Empfängervorrichtung in einer schematischen isometrischen Ansicht.

In den Figuren bezeichnen identische Bezugszeichen Elemente mit derselben Funktion und/oder dieselben Elemente.

Ein Wert- oder Sicherheitsdokument 100 kann ein Personaldokument, wie ein Reisepass, ein Personalausweis, ein Zugangsausweis oder dergleichen, eine Scheckkarte oder eine Banknote oder noch ein anderes Dokument, sein. Alle nachfolgenden Beispiele werden stellvertretend für andere Dokumententypen anhand einer Identitätskarte 100 beschrieben.

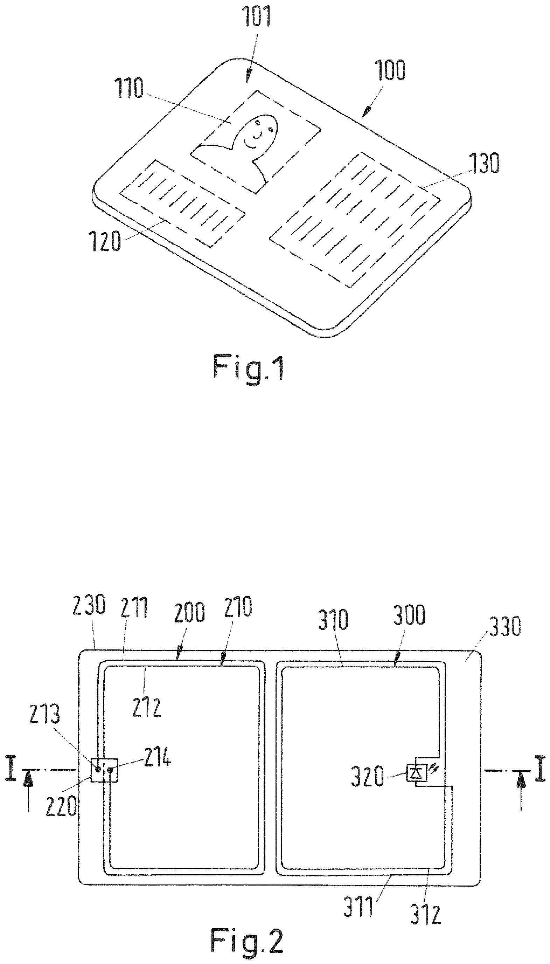

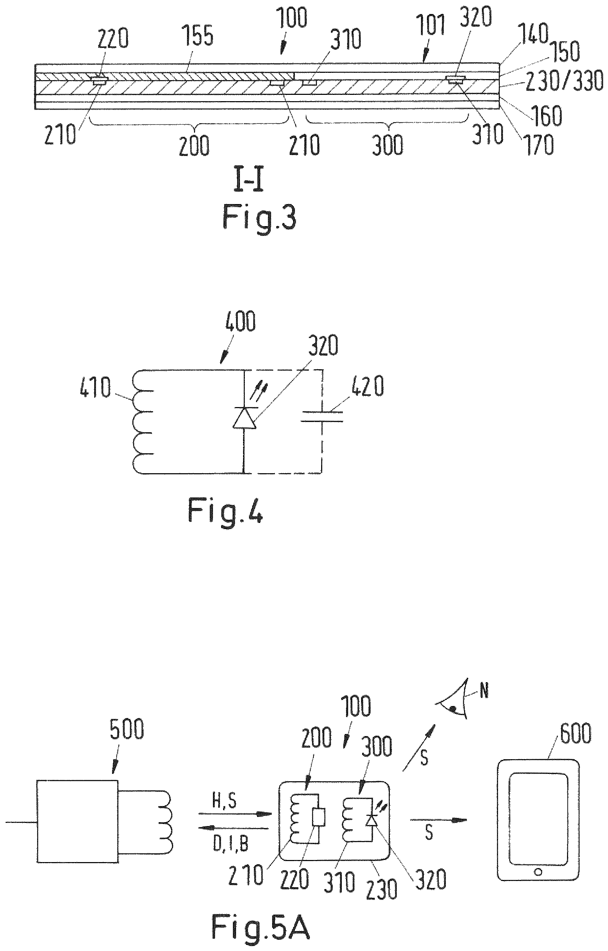

In Fig. 1 ist eine Identitätskarte 100 dargestellt, die beispielsweise als Laminat aus mehreren Polymerlagen zusammengefügt worden ist (Fig. 3). Die Karte 100 weist eine Vorderseite 101 und eine Rückseite (nicht dargestellt) auf. Auf der Vorderseite befinden sich ein Gesichtsbild 110 des Inhabers der Karte sowie zwei Datenfelder, nämlich ein erstes Datenfeld 120 und ein zweites Datenfeld 130, mit Karten- und Inhaberdaten in Klarschrift und/oder in verschlüsselter Form.

Die Polymerlagen können aus PC und/oder PET bestehen oder dieses enthalten. Die einzelnen Lagen 140, 150, 160, 170, 230/330 können ungefüllt oder mit Füllstoffen gefüllt sein. Die Lagen können durch die Lamination vorzugsweise derart miteinander verbunden sein, dass sie einen monolithischen Block bilden, der praktisch nicht mehr gespalten werden kann. Die äußeren Schichten 140, 170 der Karte können aus einem Schutzlack oder aus Polymerfolien gebildet sein. Ein Schutzlack wird nach dem Laminieren auf die laminierte Karte aufgetragen. Der Schutzlack oder diese äußeren Polymerfolien ist/sind transparent, sodass darunter liegende Informationen von außen sichtbar sind. In der Karte innenliegend befindet sich ein Transponderschaltkreis 200 mit einer Transponderantenne 210 und mit einem mit dieser elektrisch verbundenen RFID-Halbleiterchip 220 (Fig. 2). Der Transponderschaltkreis ist wegen einer darüber liegenden zumindest teilweise opaken Polymerlage 150 sowie des opaken Transponderträgers 230 nicht sichtbar (opaker Teilbereich 155 der Polymerlage 150; Fig. 3).

Auf dem Transponderträger 230 ist der Transponderschaltkreis 200 aufgebracht (Fig. 2, 3). Der Transponderträger kann ebenso wie die übrigen Lagen 140, 150, 160, 170, aus denen die Karte 100 hergestellt ist, aus einem Polymer gebildet sein, beispielsweise aus PC oder PET. Dieses Material kann wiederum ungefüllt oder gefüllt sein. Es ist bevorzugt, dass dieses Material mit einem Pigment gefüllt ist, damit diese Lage opak ist, sodass der Transponderschaltkreis von der Rückseite der Karte nicht sichtbar ist. Der Transponderschaltkreis ist in üblicher Weise aus einer Transponderantenne 210 und einem RFID-Halbleiterchip 220 gebildet. Die Transponderantenne ist in Form einer spiralförmig gewundenen Leiterbahn gebildet, die auf dem Transponderträger 230 durch Aufdrucken, beispielsweise mittels Siebdruck, einer Leitpaste oder einer Leitfarbe erzeugt ist. Die Leitpaste oder Leitfarbe ist durch in einem härtbaren Material enthaltene Metall- oder Halbleiterpartikel elektrisch leitfähig. Die Transponderantenne ist im vorliegenden Falle durch zwei Antennenwindungen 211, 212 gebildet. An den Enden der die Transponderantenne bildenden Leiterbahn befinden sich Anschlussflächen 213, 214 zur elektrischen Verbindung des RFID-Halbleiterchips mit der Transponderantenne. Da sich diese Anschlussflächen ebenso wie die entsprechenden Anschlusskontakte (nicht gezeigt) des RFID-Halbleiterchips unterhalb des Chips befinden, sind diese Flächen in Fig. 2 nur angedeutet.

Der RFID-Halbleiterchip 220 ist vorzugsweise ein ungehäuster Chip (bare die). Der Chip ist mit Anschlusskontakten in Form von Kontakthöckern versehen (nicht gezeigt). Zur Montage des Chips auf der Transponderantenne 210 und dem Transponderträger 230 wird ein anisotroper Leitkleber verwendet, um den Chip dort mechanisch zu verankern und einen elektrischen Kontakt zwischen den Kontakthöckern des Chips und den Anschlussflächen der Transponderantenne herzustellen. Der Chip wird in der Flip-Chip-Technik, d.h. über Kopf mit den Kontakthöckern nach unten, in dem Montagebereich des Chips über den Anschlussflächen 213, 214 der Transponderantenne platziert und dort befestigt, wobei sich elektrische Verbindungen jeweils eines Anschlusskontaktes des Chips mit einer Anschlussfläche der Transponderantenne bilden.

Die Leiterbahn der Transponderantenne 210 geht von der ersten Anschlussfläche 213 aus, folgt dann einer ersten Windungsbahn 211 ungefähr parallel zu den Seitenrändern des Transponderträgers 230 und gelangt dann wieder in den Chipbereich, unterquert dort den Chip 220 und folgt anschließend noch einer zweiten Windungsbahn 212 parallel zu der ersten Windungsbahn, bis sie in der zweiten Anschlussfläche 214 unter dem Chip endet. Somit überbrückt der Chip die aus zwei Windungen gebildete Transponderantenne.

Vor dem Zusammentragen der Polymerlagen 140, 150, 160, 170 und des Transponderträgers 230 ist auf dem Transponderträger ferner ein Anzeigeschaltkreis 300 zusätzlich zu dem darauf befindlichen Transponderschaltkreis 200 aufgebracht. Daher ist der Transponderträger auch ein Anzeigeträger 330. Alternativ kann der Anzeigeschaltkreis natürlich auch auf einer anderen Lage als dem Transponderträger untergebracht sein, beispielsweise auf der darüber liegenden Polymerlage 150 (falls sich der Anzeigeschaltkreis in diesem Falle auf der Betrachterseite dieser Lage befindet, kann diese Polymerlage vollständig opak sein). Der Transponder- und der Anzeigeschaltkreis können sich in diesem Falle beispielsweise jeweils im Wesentlichen über die gesamte Oberfläche des entsprechenden Trägers (Transponderträger 230, Anzeigeträger 330) erstrecken. Der Transponderschaltkreis und der Anzeigeschaltkreis sind elektrisch voneinander getrennt. Der Anzeigeschaltkreis ist aus einer Anzeigeantenne 310 und einem Anzeigeelement 320, vorliegend einer LED oder OLED, gebildet. Das Anzeigeelement kann auch ein piezoelektrischer Aktuator oder ein anderer Signalgeber sein. Die Anzeigeantenne ist ebenso wie die Transponderantenne 210 aus mindestens einer Windung 311, 312 gebildet. Vorzugsweise ist diese Leiterbahn durch mehrere, vorzugsweise drei, vier, fünf oder sechs, Windungen gebildet, die parallel zueinander angeordnet sind, sodass die Leiterbahn spiralförmig ausgebildet ist. In der in Fig. 2 gezeigten Ausführungsform weist die Anzeigeantenne zwei Windungen auf. Sie weist an ihren Enden wiederum Anschlussflächen auf (nicht dargestellt), die zur elektrischen Verbindung zu dem Anzeigeelement dienen.

Die Schaltungsanordnung des Anzeigeschaltkreises 300 stellt wie die des Transponderschaltkreises 200 einen Schwingkreis 400 dar (Fig. 4), der durch eine Induktivität 410 und eine Kapazität 420 (nur strichliert angedeutet) gebildet ist, wobei die Induktivität durch die Anzeigeantenne 310 und die Kapazität durch das Anzeigeelement 320, beispielsweise eine LED oder OLED, gebildet sind. Nicht berücksichtigt sind in dieser Darstellung allfällige ohmsche Widerstände, die den einzelnen Komponenten dieses Schwingkreises inhärent sind und die den Schwingkreis dämpfen. Die Impedanz dieses Schwingkreises ist auf die Frequenz des eingestrahlten Wechselfeldes abzustimmen. Die Induktivität der Anzeigeantenne ist durch deren geometrische Abmessungen, Form, spezifischen Widerstand und Querschnitt, durch die Anzahl von deren Windungen und die Abstände der Windungen voneinander gegeben. Die Kapazität des Anzeigeelements ist durch dessen Art, hier eine LED oder OLED, und dessen elektrische Eigenschaften gegeben.

Die Anzeigeantenne 310 ist wie die Transponderantenne 210 durch Aufdrucken einer Leitpaste oder Leitfarbe, beispielsweise mittels Siebdruck, auf den Anzeigeträger 330 hergestellt. An den Enden der Anzeigeantenne 310 befinden sich die Anschlussflächen zur elektrischen Kontaktierung des Anzeigeelements 320 (nicht dargestellt). Da das Anzeigeelement eine wesentlich kleinere Basisfläche aufweist als ein RFID-Halbleiterchip 220, ist es im Allgemeinen nicht dazu geeignet, die Windungen 311, 312 der Anzeigeantenne zu überbrücken. Daher muss in diesem Falle eine der peripheren Windungen die anderen Windungen kreuzend auf die andere Seite des Windungsstranges geführt werden, also entweder die äußere Leiterbahn des Stranges nach innen oder die innere Leiterbahn nach außen. Im ersteren Falle wird das Anzeigeelement innerhalb des von den Windungen umschlossenen Flächenbereiches montiert und im letzteren Falle im Außenbereich. Wenn das Anzeigeelement wie der RFID-Halbleiterchip Kontakthöcker als Anschlusskontakte aufweist und ungehäust vorliegt, kann es wie dieser in der Flip-Chip-Technik kopfüber mittels eines anisotropen Leitklebers im Bereich der Anschlussflächen der Anzeigeantenne auf den Anzeigeträger und damit auch auf die Anschlussflächen aufgesetzt werden, wobei eine elektrische Verbindung zwischen jeweils einem Anschlusskontakt des Anzeigeelements mit einer Anschlussfläche der Anzeigeantenne hergestellt wird.

In dem RFID-Schaltkreis 200 gespeicherte Daten können mittels einer Datenaustausch-Vorrichtung, beispielsweise eines Schreib-/Lesegeräts (Reader) 500 ausgelesen werden, wobei die Daten/Informationen I von dem Transponderschaltkreis 200 der Identitätskarte 100 auf den Reader übertragen werden. In Fig. 5A ist eine Schemazeichnung einer Anordnung des Readers 500 und der Identitätskarte 100 gezeigt, wobei sich in der Identitätskarte Schaltkreise (Transponderschaltkreis 200, Anzeigeschaltkreis 300), jeweils aus einer Antenne (Transponderantenne 210, Anzeigeantenne 310), hier nur schematisch dargestellt, und jeweils einem Element (RFID-Halbleiterchip 220, Anzeigeelement, LED, OLED 320) gebildet, befinden.

Zur Bewerkstelligung der Datenübertragung D sendet der Reader 500 ein elektromagnetisches Hochfrequenzfeld H aus, das von dem Transponderschaltkreis 200 detektiert wird, sodass in dem RFID-Halbleiterchip 220 gespeicherte Daten ausgelesen und an den Reader zurückübertragen werden können. Das Hochfrequenzfeld hat beispielsweise eine Frequenz von 13,56 MHz. Zur Datenübertragung an den Reader kodiert der Transponderschaltkreis 200 das Hochfrequenzfeld über dessen Phase und/oder Amplitude.

Das elektromagnetische Hochfrequenzfeld H erzeugt gleichzeitig in dem Anzeigeschaltkreis 300 in der Identitätskarte 100 ein Signal, sodass die LED, OLED 320 aktiviert wird. Dadurch leuchtet diese, sodass ein Nutzer N das Vorhandensein des Hochfrequenzfeldes auf diese Weise indirekt erkennen kann. Alternativ kann das Leuchten der LED, OLED auch von einer Empfängervorrichtung 600, hier einem Smartphone, detektiert werden.

Den Abschluss des Datenübertragungsvorganges D wird von dem Reader 500 erkannt. Daraufhin wird die Erzeugung des Hochfrequenzfeldes H beendet, sodass die Aktivierung der LED; OLED 320 ebenfalls beendet wird. Dadurch erkennt auch der Nutzer N, dass der Datenübertragungsvorgang beendet ist.

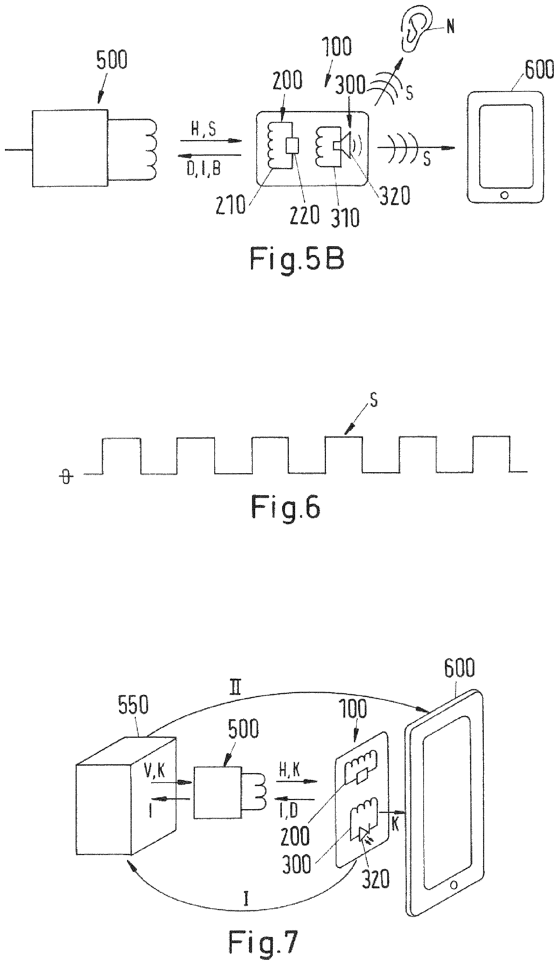

In Fig. 5B ist eine alternative Ausführungsform zu der Anordnung von Fig. 5A gezeigt: Anstelle einer LED oder OLED 320 befindet sich in diesem Falle ein piezoelektrischer Aktuator als Lautsprecher in der Identitätskarte 100. Dadurch wird der Vorgang der Datenübertragung D akustisch angezeigt.

Die in Fig. 5A, 5B gezeigten Anordnungen können auch zur Informationsübermittlung an die Empfängervorrichtung 600 (Smartphone) verwendet werden:
In diesem Falle sendet der Reader 500 zunächst das elektromagnetische Hochfrequenzfeld H aus, das zu einer Datenübertragung D von dem RFID-Halbleiterchip 220 des Transponderschaltkreises 200 zum Reader führt. Die ausgelesenen Daten, die eine Information I kodieren, werden im Reader oder in einem mit dem Reader verbundenen Computer (in Fig. 5A, 5B nicht dargestellt) gespeichert. Der Abschluss des Lesevorganges wird durch ein von dem Transponderschaltkreis übermitteltes Stoppsignal mit der Signalfolge B ("Lesen beendet") an den Reader kommuniziert. Daraufhin sendet der Reader ein mit einer Signalfolge S amplitudenmoduliertes elektromagnetisches Hochfrequenzfeld aus. Diese Amplitudenmodulation führt dazu, dass der in dem Anzeigeschaltkreis 300 induzierte elektrische Strom ebenfalls mit dieser Signalfolge moduliert wird, sodass auch die Aktivierung des Anzeigeelements 320 (LED, OLED, piezoelektrischer Aktuator) mit dieser Signalfolge stattfindet. Da diese Signalfolge beispielsweise eine mit dem menschlichen Auge leicht erkennbare Taktfrequenz darstellt, kann der Nutzer N die Beendigung des Lesevorganges direkt erkennen (siehe beispielsweise die Signalfolge S in Fig. 6). Diese Signalfolge wird vorzugsweise nur während einer vorgegebenen Zeitspanne erzeugt, beispielsweise während einer Zeitspanne von 5 s.

Falls die Identitätskarte 100 einen Energiespeicher (Batterie) aufweist, kann der Aktivierungsvorgang auch während einer unbeschränkten oder zumindest sehr langen Dauer aufrechterhalten werden, nämlich auch dann, wenn die Karte aus dem Feldbereich des Readers 500 entfernt wird. Die Aktivierung kann dann gegebenenfalls mit einer verminderten Frequenz fortgeführt werden, um den Energieverbrauch zu senken. Diese fortdauernde Aktivierung ermöglicht anzuzeigen, dass schon ein Datenübertragungsvorgang D stattgefunden hat. Es ist bevorzugt, dass diese Variante nur dann stattfindet, wenn bestimmte sensible Daten aus dem RFID-Halbleiterchip 220 ausgelesen wurden. Es ist denkbar, dass die fortdauernde Aktivierung des Anzeigeelements 320 durch einen berechtigten Schreib-/Lesevorgang wieder gelöscht wird.

In einer weiteren besonders bevorzugten Ausführungsform der vorliegenden Erfindung wird die mittels Datenübertragung D an den Reader 500 übermittelte Information I nach dem Speichern in dem Reader oder in einem daran angeschlossenen Computer oder Hintergrundsystem 550 (Fig. 7) gespeichert. In dem Computer kann diese Information weiterverarbeitet, beispielsweise verschlüsselt, werden. Der Computer überträgt dann die verarbeiteten Informationen in Form von Daten V an den Reader, der daraufhin das elektromagnetische Hochfrequenzfeld H mit einer Kodier-Signalfolge K entsprechend amplitudenmoduliert. Diese Modulation wird von dem Anzeigeschaltkreis 300 detektiert, sodass das Anzeigeelement 320 (LED, OLED) mit der entsprechenden Signalfolge dieser Modulation aktiviert wird. Diese Aktivierung wird von der Empfängervorrichtung 600 (beispielsweise einem Smartphone) detektiert. Die Empfängervorrichtung dekodiert die Signalfolge und erhält somit die Daten/Informationen, die in dem RFID-Halbleiterchip gespeichert sind. Die Empfängervorrichtung dekodiert dann diese empfangenen Daten und kann die daraus gebildeten Informationen daher auf einem Display anzeigen.

Auf diese Art und Weise können die in dem RFID-Halbleiterchip 220 gespeicherten Daten auf dem Umweg über den Reader 500 und den Computer oder das Hintergrundsystem 550 (Signalweg I) und von dort über den Anzeigeschaltkreis 300 zur Empfängervorrichtung 600 (Signalweg II) übertragen werden (Fig. 7), sodass sie dort für einen Nutzer wahrnehmbar gemacht werden können.

### Bezugszeichenliste

- 100: Wert- oder Sicherheitsdokument, Identitätskarte
- 101: Vorderseite
- 110: Gesichtsbild
- 120: erstes Datenfeld
- 130: zweites Datenfeld
- 140: äußere Schicht, Lage
- 150: innere Polymerlage
- 155: opaker Teilbereich
- 160: innere Polymerlage
- 170: äußere Schicht, Lage
- 200: Transponderschaltkreis
- 210: Transponderantenne
- 211: Antennenwindung
- 212: Antennenwindung
- 213: Anschlussfläche
- 214: Anschlussfläche
- 220: RFID-Halbleiterchip
- 230: Transponderträger, Lage
- 300: Anzeigeschaltkreis
- 310: Anzeigeantenne
- 311: Antennenwindung
- 312: Antennenwindung
- 320: Anzeigeelement, LED, OLED, piezoelektrischer Aktuator, Lautsprecher
- 330: Anzeigeträger, Lage
- 400: Schwingkreis
- 410: Induktivität
- 420: Kapazität
- 500: Datenaustausch-Vorrichtung, Schreib-/Lesegerät (Reader)
- 550: Datenverarbeitungsvorrichtung, Computer
- 600: Empfängervorrichtung, Smartphone
- B: Signalfolge "Lesen beendet", Stoppsignal
- D: Daten-, Informationsübertragung zum Reader
- H: elektromagnetisches Hochfrequenzfeld
- I: Information, Informationsspeicherung
- K: Kodier-Signalfolge
- N: Nutzer, Person
- S: (Anzeige-)Signalfolge
- V: Übermittlung verarbeiteter Daten, Informationen

## Patentansprüche

1. Verfahren zum Austauschen von Daten zwischen einem Wert- oder Sicherheitsdokument (100) und einer ein elektromagnetisches Hochfrequenzfeld (H) erzeugenden Datenaustausch-Vorrichtung (500), wobei das Wert- oder Sicherheitsdokument (100) mindestens einen Transponderschaltkreis (200) mit jeweils mindestens einem RFID-Halbleiterchip (220) und mindestens einen Anzeigeschaltkreis (300) mit jeweils mindestens einem Anzeigeelement (320) aufweist, wobei das Verfahren folgende Verfahrensschritte umfasst:
(a) Erzeugen des elektromagnetischen Hochfrequenzfeldes (H) mittels der Datenaustausch-Vorrichtung (500);
(b) Durchführen eines Datenübertragungsvorganges (D), umfassend das Auslesen und Übertragen von in dem mindestens einen RFID-Halbleiterchip (220) gespeicherten Daten zu der Datenaustausch-Vorrichtung (500); und
(c) Erzeugen eines Signals mittels des elektromagnetischen Hochfrequenzfeldes (H) in dem mindestens einen Anzeigeschaltkreis (300), sodass das mindestens eine Anzeigeelement (320) in dem mindestens einen Anzeigeschaltkreis (300) aktiviert wird,
**dadurch gekennzeichnet, dass** das Verfahren die folgenden weiteren Verfahrensschritte aufweist:
(f) Umwandeln der in dem Datenübertragungsvorgang (D) übertragenen Daten in eine Kodier-Signalfolge (K);
(g) Modulieren des elektromagnetischen Hochfrequenzfeldes (H) mit der Kodier-Signalfolge (K), sodass das mindestens eine Anzeigeelement (320) mit der Kodier-Signalfolge (K) aktiviert wird.

2. Verfahren zum Austauschen von Daten nach Anspruch 1, **dadurch gekennzeichnet, dass** das Signal in dem mindestens einen Anzeigeschaltkreis (300) gemäß Verfahrensschritt (c) erzeugt wird, solange Daten gemäß Verfahrensschritt (b) aus dem mindestens einen RFID-Halbleiterchip (220) ausgelesen und zu der Datenaustausch-Vorrichtung (500) übertragen werden.

3. Verfahren zum Austauschen von Daten nach einem der vorstehenden Ansprüche,
**dadurch gekennzeichnet, dass** das Verfahren im Anschluss an Verfahrensschritt (c) folgende weitere Verfahrensschritte umfasst:
(d) Übertragen eines Stoppsignals (B) an die Datenaustausch-Vorrichtung (500) bei einer Beendigung des Datenübertragungsvorganges (D);
(e) Modulieren des elektromagnetischen Hochfrequenzfeldes (H) mittels der Datenaustausch-Vorrichtung (500) mit einer Anzeige-Signalfolge (S), sodass das Anzeigeelement (320) mit der Anzeige-Signalfolge (S) aktiviert wird.

4. Verfahren zum Austauschen von Daten nach einem der vorstehenden Ansprüche, **dadurch gekennzeichnet, dass** eine Aktivierung des mindestens einen Anzeigeelements (320) mittels einer Empfängervorrichtung (600) detektiert wird.

5. Verfahren zum Austauschen von Daten nach einem der vorstehenden Ansprüche, **dadurch gekennzeichnet, dass** das Verfahren den folgenden weiteren Verfahrensschritt aufweist:
(h) Detektieren der Aktivierung des mindestens einen Anzeigeelements (320) mit der Kodier-Signalfolge (K) mittels einer Empfängervorrichtung (600).

## Claims

1. Method for exchanging data between a value or security document (100) and a data exchanging device (500) which generates an electromagnetic high-frequency field (H), wherein the value or security document (100) comprises at least one transponder circuit (200) with in each case at least one RFID semiconductor chip (220) and at least one display circuit (300), with in each case at least one display element (320), wherein the method comprises the following method steps:
(a) generating the electromagnetic high-frequency field (H) by means of the data-exchange device (500);
(b) carrying out a data exchanging process (D), comprising the reading and transmitting of the data stored in the at least one RFID semiconductor chip (220) to the data exchanging device (500); and
(c) generating a signal by means of the electromagnetic field (H) in the at least one display circuit (300), so that the at least one display element (320) is activated in the at least one display circuit (300),
**characterised in that** the method comprises the following further steps:
(f) converting the data exchanged in the data transfer process (D) into a method coding signal sequence (K);
(g) modulating the electromagnetic high-frequency field (H) with the coding signal sequence (K), such that the at least one display element (320) is activated by the coding signal sequence (K).

2. Method for exchanging data according to claim 1, **characterised in that** the signal in the at least one display circuit (300) is generated in accordance with method step (c), as long as data is read from the at least one RFID semiconductor chip (220) in accordance with method step (b) and transmitted to the data exchange device (500).

3. Method for exchanging data according to any one of the preceding claims, **characterised in that** the method comprises the following further method steps leading on from method step (c):
(d) transmitting a stop signal (B) to the data-exchanging device (500) at an ending of the data-transmission process (D);
(e) modulating the electromagnetic high-frequency field (H) by means of the data exchanging device (500) with a display signal sequence (S), so that the display element (320) is activated with the display signal sequence (S).

4. Method for exchanging data according to any one of the preceding claims, **characterised in that** an activation of the at least one display element (320) is detected by means of a receiving device (600).

5. Method for exchanging data according to any one of the preceding claims, **characterised in that** the method comprises the following further method step:
(h) detecting the activation of the at least one display element (320) with the coding signal sequence (K) by means of a receiving device (600).

## Revendications

1. Procédé d'échange de données entre un document de valeur ou de sécurité (100) et un dispositif d'échange de données (500) générant un champ électromagnétique à haute fréquence (H), le document de valeur ou de sécurité (100) comportant au moins un circuit transpondeur (200) pourvu d'au moins une puce à semi-conducteur RFID (220) et au moins un circuit de présentation (300) pourvu d'au moins un élément de présentation (320), le procédé comprenant les étapes suivantes :
(a) générer le champ électromagnétique à haute fréquence (H) au moyen du dispositif d'échange de données (500) ;
(b) exécuter un processus de transmission de données (D), comprenant la lecture et la transmission de données mémorisées dans l'au moins une puce à semi-conducteur RFID (220) vers le dispositif d'échange de données (500) ; et
(c) générer un signal au moyen du champ électromagnétique à haute fréquence (H) dans l'au moins un circuit de présentation (300) de sorte que l'au moins un élément de présentation (320) soit activé dans l'au moins un circuit de présentation (300),
**caractérisé en ce que** le procédé comporte les étapes supplémentaires suivantes :
(f) convertir les données transmises dans le processus de transmission de données (D) en une séquence de signaux de codage (K) ;
(g) moduler le champ électromagnétique à haute fréquence (H) avec la séquence de signaux de codage (K) de sorte que l'au moins un élément de présentation (320) soit activé avec la séquence de signaux de codage (K).

2. Procédé d'échange de données selon la revendication 1, **caractérisé en ce que** le signal est généré dans l'au moins un circuit de présentation (300) selon l'étape de procédé (c) tant que les données sont lues dans l'au moins une puce à semi-conducteur RFID (220), et transmises au dispositif d'échange de données (500), selon l'étape de procédé (b).

3. Procédé d'échange de données selon l'une des revendications précédentes, **caractérisé en ce que** le procédé comprend les étapes supplémentaires suivantes en liaison avec l'étape de procédé (c) :
(d) transmettre un signal d'arrêt (B) au dispositif d'échange de données (500) à la fin du processus de transmission de données (D) ;
(e) moduler le champ électromagnétique à haute fréquence (H) au moyen du dispositif d'échange de données (500) avec une séquence de signaux de présentation (S) de sorte que l'élément de présentation (320) soit activé avec la séquence de signaux de présentation (S).

4. Procédé d'échange de données selon l'une des revendications précédentes, **caractérisé en ce que** l'activation de l'au moins un élément de présentation (320) est détectée au moyen d'un dispositif de réception (600).

5. Procédé d'échange de données selon l'une des revendications précédentes, **caractérisé en ce que** le procédé comprend l'étape de procédé supplémentaire suivante :
(h) détecter au moyen d'un dispositif de réception (600) l'activation de l'au moins un élément de présentation (320) avec la séquence de signaux de codage (K).
